# EUROPEAN PATENT SPECIFICATION

(11) **EP 1 122 108 B1**
(45) Date of publication and mention of the grant of the patent: **17.08.2005**
(21) Application number: 01102308.2
(22) Date of filing: 01.02.2001
(51) Int. Cl.: B60J 7/06

(54) **Device for concertinaing the tarpaulin of a transport vehicle**
Faltvorrichtung für Plane eines Transportfahrzeuges
Dispositif pour le pliage d'une bâche de véhicule de transport

(30) Priority: 02.02.2000 IT MI000151
(43) Date of publication of application: 08.08.2001
(73) Proprietor: Autocar S.p.A., 20129 Milan (IT)
(72) Inventor: Antonelli, Vincenzo Antonio, 20064 Gorgonzola (Milan) (IT)
(74) Representative: Gervasi, Gemma, Dr.

(56) References cited:
- EP-A- 0 421 554
- FR-A- 2 742 105
- US-A- 4 547 014

## Description

### Field of the invention

The invention consists of a device for concertinaing the tarpaulin of a transport vehicle, comprising a plurality of rods with one end hinged to a carriage sliding on a longitudinal beam belonging to the supporting structure of the device and the other ends interconnected by a joint element.

The joint element comprises a combination of an elongated-shaped rigid body with a first and a second longitudinal slot, sloping with respect to each other, in which the ends of the first and the second rod slide respectively, and an elastic seal, fixed to the lower part of the rigid body and with height greater than the distance between the upper part of the longitudinal beam and the point at which the end of a rod is hinged to the corresponding carriage.

### Background of the invention

The present invention concerns a device for concertinaing the tarpaulin of a transport vehicle and more in particular a folding structure designed to support and accompany the tarpaulin when it is concertinaed.

Similar devices are currently used to protect from dirt and bad weather the loads of transport vehicles like lorries, railway cars for goods etc. and also to provide fixed ground shelters for various types of material.

In general, the concertina structures to which the present invention refers are made of a frame, almost always consisting of metal profiles, which supports a plastic tarpaulin, which covers and partially or totally closes the loading platform of the transport vehicle. One example of a structure of this type is shown in FR 2 742 105 A1.

The loading platform is opened and closed by concertinaing, partially or totally, the tarpaulin that constitutes the roof of the cover.

It is often necessary to use heavy, strong and (relatively) robust tarpaulins which are therefore difficult to fold: to facilitate opening and closing of the cover, two sides of the part of the tarpaulin to be raised can be supported by a concertina-folding device consisting of a set of jointed rods with an end sliding (by means of carriages and/or other known means) along a longitudinal beam belonging to the cover supporting structure.

At times the resistance of the tarpaulin to folding is further increased by the fact that its edges are reinforced by turning them up and sewing a cord of synthetic material inside: very often this cord makes the edges of the tarpaulin so stiff that, when folded, the tarpaulin inevitably forms loops with radius of curvature too wide to be able to adapt to the concertina support.

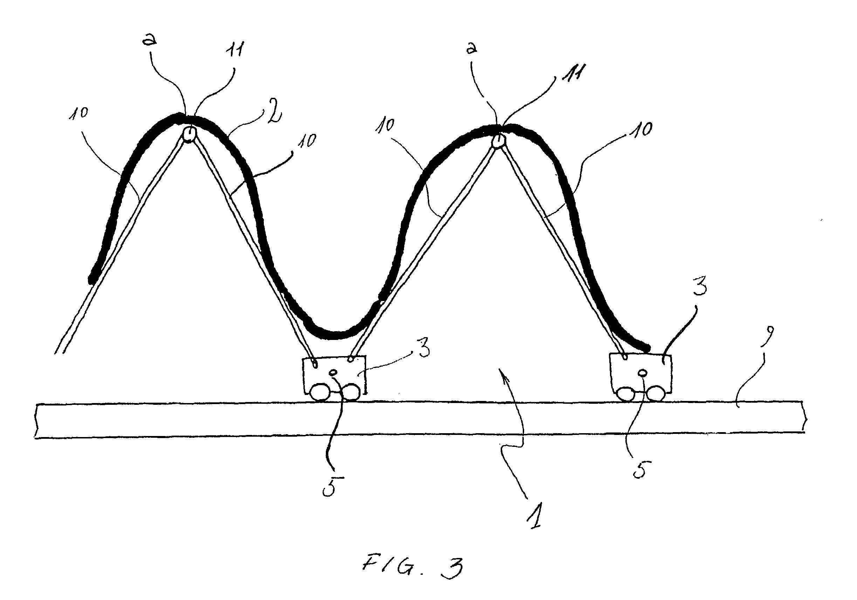

This involves (or can involve) considerable disadvantages as normally the length of the tarpaulin is (practically) equal to that of the extended concertina support: when the concertina support is folded, due to the loops formed the tarpaulin is not able to "adapt" to the concertina support, as illustrated schematically in figure 3.

Consequently, the tarpaulin considerably stresses both the rods of the concertina support (when folded) and the points at which its edges are rigidly fixed (for example riveted) to some elements of the tarpaulin supporting frame: this causes (or can cause) problems due to the fact that the rods bend (or can bend) and/or the tarpaulin tears (or can tear) at the points where it is fixed to the supporting frame.

Furthermore, the extended and closed tarpaulin can produce tension on the concertina support as its rods are subject to "tip load" and bend (or can bend) downwards, making it (practically) impossible to fold the concertina support; this problem is aggravated by the folding stiffness of the tarpaulin.

To remedy said problems presented by the known concertina supports, motor vehicle fitters often do not secure the edges of the tarpaulin to some of the connection points provided for said purpose on the supporting frame, but this involves the risk of infiltration of rainwater, tearing due to "flapping" of the tarpaulin when the vehicle is in movement and, in general, less efficient protection of the load against the external environment.

Making the tarpaulin longer than the concertina support is not a valid solution to the problem as this would leave large gaps open to the outside, making the tarpaulin less efficient as regards protection of the load.

According to another known embodiment (not illustrated in the figures), each concertina support element consists of arches made of a plastic body with a more flexible area in the middle but these are not normally able to bend completely (limiting the effectiveness of the concertina) and tend to wear and snap frequently: use of these materials is particularly critical when the external temperature is very low, making the plastic more brittle.

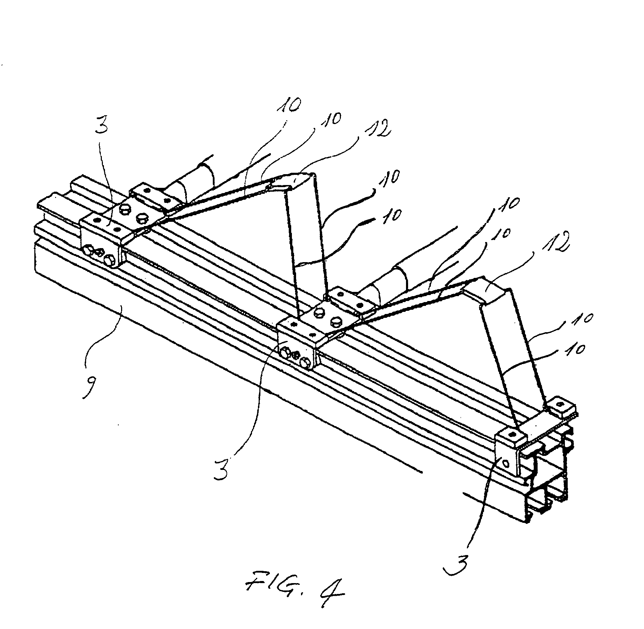

According to a further embodiment (also known and illustrated schematically in figure 4), each concertina support element consists of pairs of rods interconnected by joints made of a soft elastic material (or rubber tubes) which can lengthen and shorten to adapt to the tarpaulin: these joints made of soft material are, however, subject to fatigue failure (in fact they are continuously tensioned and released) and/or wear against the tarpaulin material.

The aim of the present invention is to produce a device for concertinaing the tarpaulin of the loading platform of a transport vehicle which is not subject to the defects and limits presented by the existing known devices.

### Summary of the invention

The subject of the present invention is a device for concertinaing the tarpaulin of a transport vehicle, comprising a plurality of rods with one end hinged to a carriage sliding on the upper part of a longitudinal beam belonging to the supporting structure of the device; the other ends of the rods are connected by a joint element comprising a combination of an elongated-shaped rigid body provided with a first and a second longitudinal slot in which the ends of rods slide connected by the joint element, and an elastic seal fixed to the lower part of the rigid body and suitable to rest on the upper part of the longitudinal beam when the concertina covering element consisting of the rods and the joint element is completely open.

### List of the figures

The invention will now be better described with reference to a non-restrictive example of an embodiment illustrated in the attached figures, where:
- figure 1 shows schematically a first concertina covering device of known type;
- figure 2 shows schematically an area of the edge of the tarpaulin;
- figure 3 shows schematically the device of figure 1 sectioned along line A-A;
- figure 4 shows schematically a second concertina covering device of known type;
- figure 5 shows schematically a side view of a concertina support element embodied according to the present invention;
- figure 6 shows schematically a view from the bottom of the concertina support element of figure 5;
- figures 7-9 show schematically some phases in folding of the concertina support of figure 5.

In the attached figures, the corresponding elements will be identified by means of the same numerical references.

### Detailed description of the invention

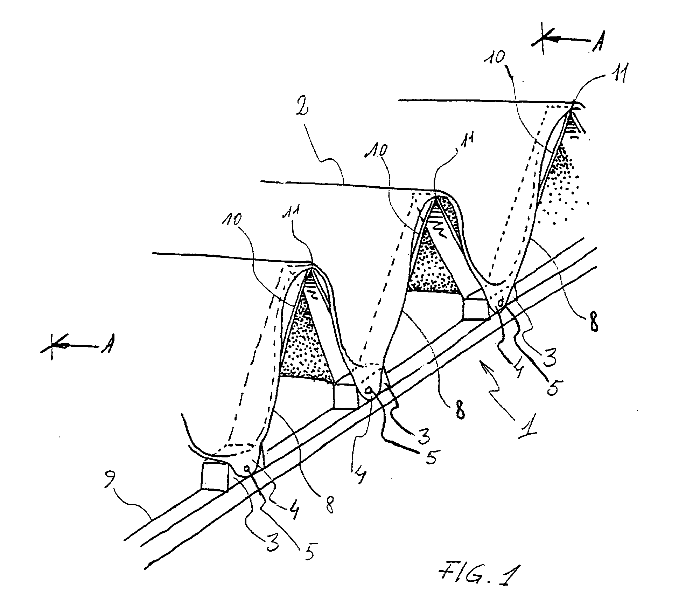

Figure 1 shows schematically a first concertina covering device of known type, comprising the concertina support 1 and the tarpaulin 2, fixed to the carriages 3 (or to another functionally equivalent sliding element) via the fixing flaps 4 fixed to the rivets (or pins) 5; the carriages 3 run on the upper part of a longitudinal beam 9 belonging to the supporting structure of the device.

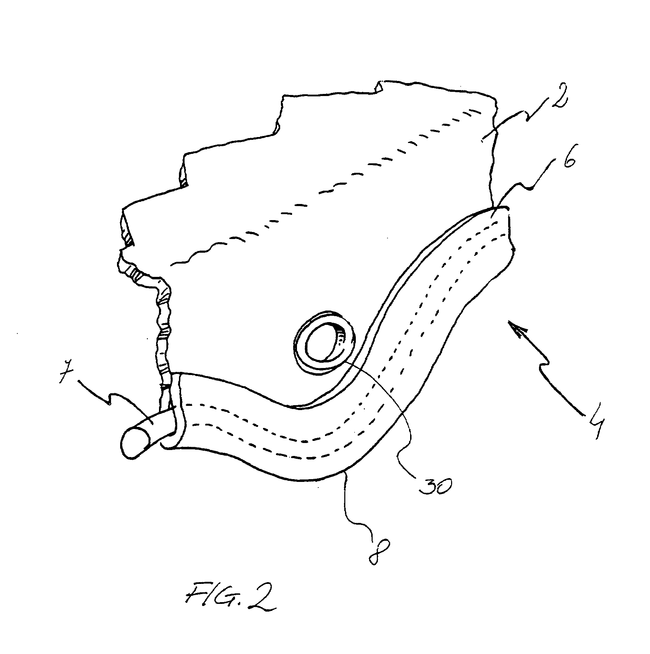

Figure 2 shows schematically an area of the edge 8 of the tarpaulin 2, reinforced by turning up the hem 6 and sewing it around a cord 7, generally made of synthetic material, which runs along the whole edge 8 of the tarpaulin 2, fixed to the carriages 3 by means of rivets 5 inserted in the hemmed holes 30.

Returning to Figure 1, the rods 10 are hinged to the carriages 3, said rods being in their turn hinged respectively in the hinge 11 (illustrated in Figure 3); the rods 10 support and guide the edge 8 of the tarpaulin 2 when the tarpaulin is concertinaed.

When the concertina support 1 is folded, the rods 10 move from a position almost parallel to the beam 9 (or slightly sloping, at the most) to a very sloping position when the concertina support 1 is completely folded.

The longitudinal beam positioned corresponding to the other side of the loading platform is fitted with a covering device (not shown) the same as the one shown in figure 1 and comprising a concertina support, the rods of which sustain and guide the other edge of the tarpaulin 2 when the tarpaulin 2 is concertinaed.

Figure 3 is a schematic side view of the device of Figure 1 sectioned along line A-A.

From said figure it is evident that, if the overall length of the tarpaulin 2 is (practically) equal to the length of the concertina support 1, when the concertina support 1 is folded, due to the loops formed by the tarpaulin 2 the tarpaulin is not able to "adapt" to the concertina support 1, from which it tends to move away due to the resistance to folding of the tarpaulin 2, in particular along its edges 8: as the tarpaulin 2 cannot alter its dimensions, the tarpaulin itself exerts considerable stress on both the rods 10 of the concertina support 1 (subject to compression at points a) and the holes 30, with consequent risk of tearing; furthermore at points (a) the tarpaulin 2 is subject to wear by the concertina support 1.

This is (or can be) the cause of malfunctioning due to the fact that the rods 10 bend (or can bend) and/or the tarpaulin 2 tears (or can tear) at the carriage 3 fixing points 30.

Figure 4 shows schematically a second concertina covering device of known type, in which the rods 10 are interconnected by means of intermediate elements 12 consisting of sleeves made of soft elastic synthetic material which, by varying in length, compensate for the effect of the loops formed by the tarpaulin 2.

This solution, however, is easily subject to wear, due to the softness of the material of element (12), or to fatigue failure.

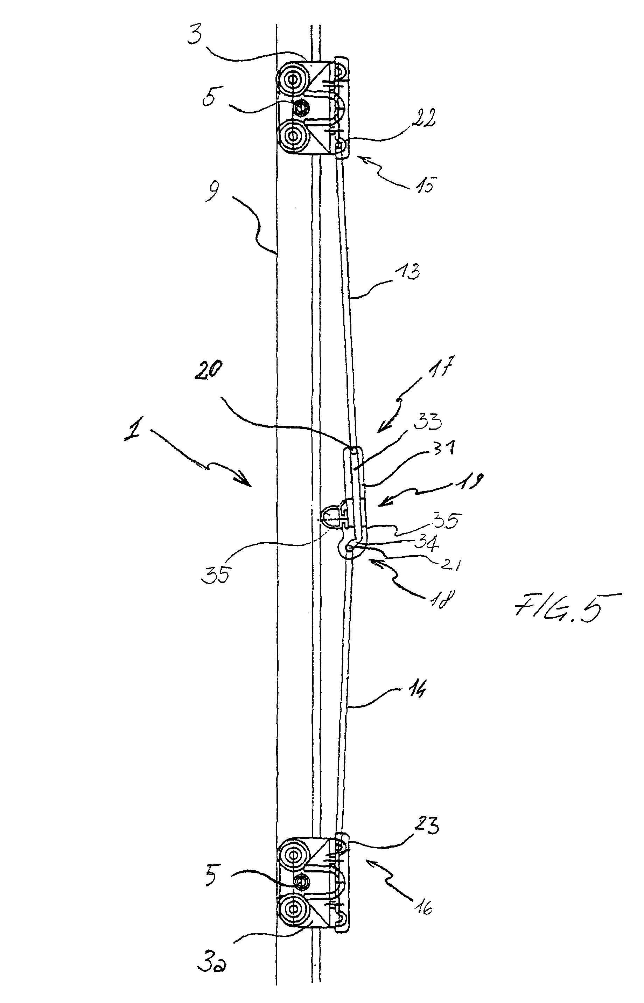

Figure 5 shows schematically a side view of an element of a concertina support 1, produced according to the invention, comprising a plurality of rods (13, 14), in the shape of a closed ring, with one end (15, 16) hinged to a carriage 3 sliding on the upper part of the longitudinal beam 9 and the other ends (17, 18) interconnected by a joint element 19.

The joint element 19 comprises a combination of an elongated-shaped rigid body 31 with a first and a second longitudinal slot (32, 33) in which the ends (20, 21) of the rods (13, 14) slide, connected by the joint element 19, and a pad 35 made of elastic material, fixed to the lower part of the rigid body 31; said rigid body rests on the upper part of the longitudinal beam 9 when the element of the concertina support 1 consisting of the rods (13, 14) and the joint element 19 is fully open and the tarpaulin 2 (fixed as known to the carriages 3 and not illustrated in the figures 5-9) is consequently taut, as required for a lorry in movement.

The first and the second longitudinal slot (32, 33) are divided by at least one tooth 34 (or by another functionally equivalent means) which prevents the first rod 13 (sliding in the first slot 32) from slipping accidentally into the second slot 33 and the second rod 14 (sliding in the second slot 33) from slipping accidentally into the first slot 32.

The second slot 33 is sloping with respect to the first slot 32 at a pre-set angle (preferably an angle of approximately 60 degrees and in any case between approximately 50 and 70 degrees) and is shorter than the first slot 32.

As the second slot 33 is sloping with respect to the first slot 32, the rods (13, 14) are not in line: said fact facilitates folding of the concertina support element consisting of the rods (13, 14) and of the joint element 19.

The length of the first slot 32 is, preferably, approximately 60 mm and is in any case between approximately 50 and 70 mm; the length of the second slot 33 is, preferably, approximately 7-8 mm and in any case between approximately 5 and 10 mm.

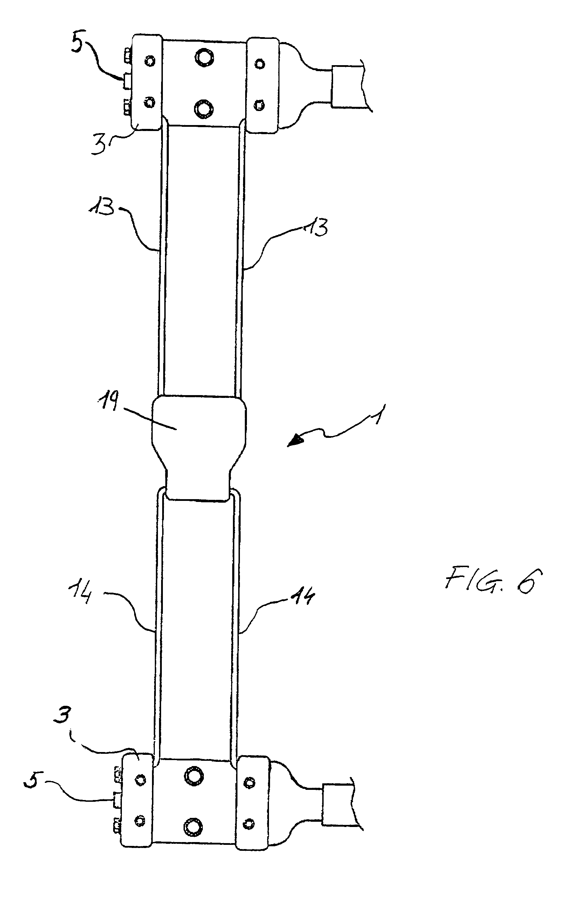

Figure 6 shows an overhead view of the element of a concertina support 1 shown in Figure 1: Figure 6 illustrates the rigid body 31 that interconnects the rods (13, 14) in the shape of a ring and the carriages 3 to which are hinged the ends of the rods 13 and 14 not connected by the rigid body 31; each of the carriages 3 are also connected to a section of one of the cross members belonging to the supporting structure of the cover, not described herein as they are known and are in any case unrelated to the present invention.

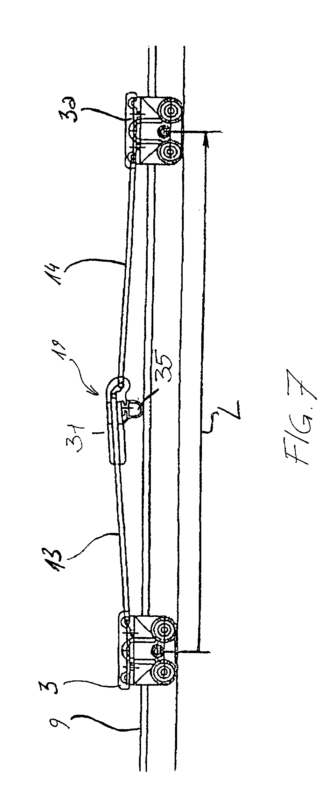

As can be seen from figure 6, at the level of the first slot 32 the width of the rigid body 31 is greater than that of the first rod 13: the rigid body 31 features two pairs of protruding portions that extend throughout the length of the first slot 32, constraining the first rod 13 to slide without rotating in the first slot 32 (figures 7-9).

Finally, the height of the elastic pad 35 is greater than the distance between the upper part of the longitudinal beam 9 and the point at which the end of the first or of the second rod (13, 14) respectively, is hinged to a carriage 3: in this way when the concertina cover element illustrated in the figures is fully extended with the rods (13, 14) positioned at the end of the related slots (32, 33) and the pad 35 rests on the upper part of the longitudinal beam 9 (figure 5), both the rods 13 and 14 are sloping upwards forming an angle which is always smaller than a straight angle, thus facilitating folding of the above concertina cover element.

Operation of the invention will now be summarily described with reference to figures 5 and 7-9.

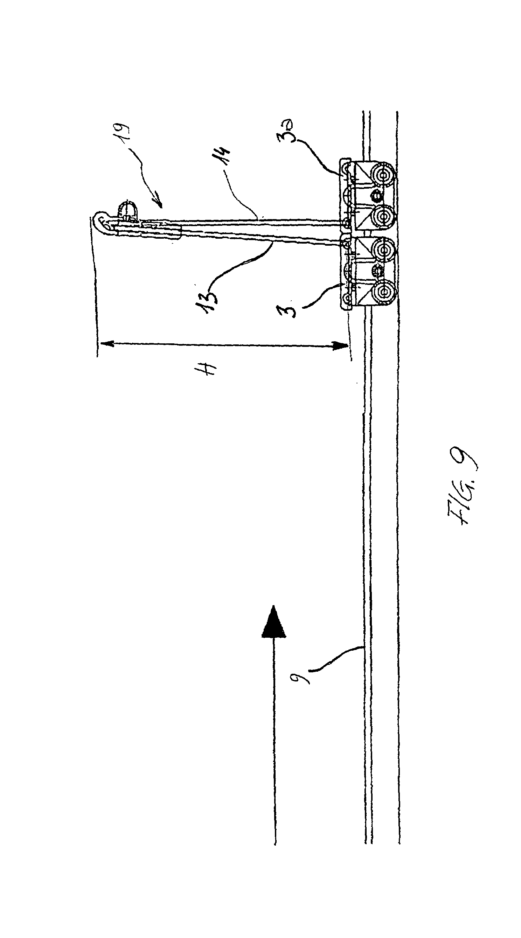

Figure 5 shows the element of the concertina support 1 (consisting of the rods 13 and 14 and the joint element 19) fully extended: when (to uncover the lorry) the carriage 3, to which the rod 13 is hinged, is pushed (directly or via one or more further carriages 3, not illustrated in the figures in order to simplify the graphic representation) in the direction indicated by an arrow in figure 9 (i.e. from left to right), the rod 13 slides in the slot 32 of the rigid body 31 until it stops against the at least one tooth 34 (figure 7), reducing the distance between the carriages 3; consequently the tarpaulin 2 is no longer tensioned and can be easily folded, eliminating the risk of breaking the tarpaulin due to (repeated) abnormal stress at its fixing points to the carriages 3 and/or to other elements of the supporting structure.

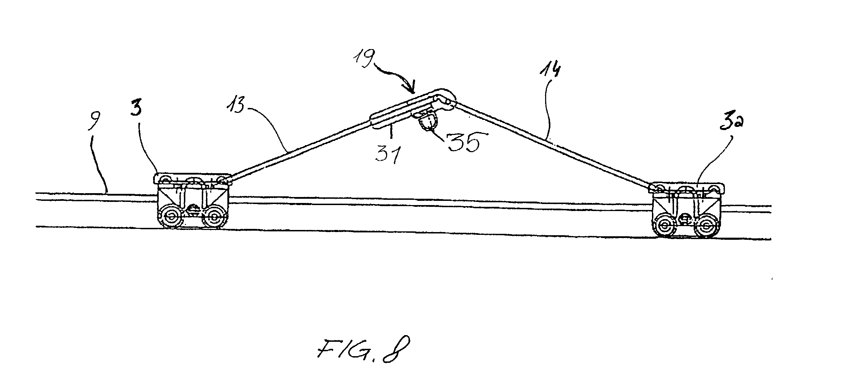

Further pressure in the direction of the arrow on the carriage 3 induces the rod 13 to move along the slot 32 which, as it is sloping, induces in its tum the rigid body 31 to rise from the beam 9; the concertina support element illustrated in figures 5-9 therefore begins to fold (figure 8) and the rod 14 rotates with respect to the rigid body 31 until it assumes a position almost parallel to the rod 13 when the element of the concertina support 1 is completely folded (figure 9).

The possibility of moving the carriages 3 closer to each other before the element of the concertina support 1 begins to rise means that the rods (13, 14), also with the tarpaulin 2 closed, can never be loaded at their tips and therefore cannot bend; all tension is immediately relieved from the tarpaulin 2; the element of the concertina support 1 completely folded (Figure 9) is more compact in height, compensating for the effect of the loops of the tarpaulin 2 due to the resistance to folding of the tarpaulin itself, thus reducing tension, the probability of breakage, wear and the risks of tearing the tarpaulin 2.

The present invention can be produced according to some further embodiments which are particularly simple and cheap to build or which offer improvements with respect to the risk of bending of the rod tips, and can be applied on both motor vehicles and lorries, for railway transport or also for fixed structures for the deposit, protection and storage of goods.

While remaining within the scope of the invention, it is possible for a technician to make all the modifications and improvements to the device for concertinaing the tarpaulin of a transport vehicle subject of the present description suggested by normal experience and natural technical evolution.

## Claims

1. Device for concertinaing the tarpaulin of a transport vehicle, comprising a plurality of rods (13, 14) with one end (15, 16) hinged to a carriage (3) sliding on the upper part of a longitudinal beam (9) belonging to the supporting structure of said device, the other ends (17, 18) of the rods (13, 14) being interconnected by a joint element (19) **characterised in that** said joint element (19) comprises an elongated-shaped rigid body (31) provided with a first and a second longitudinal slot (32, 33) in which the ends (20, 21) of the first and the second rod (13, 14) slide respectively, and an elastic pad (35) fixed to the lower part of the rigid body (31) and suitable to rest on the upper part of the longitudinal beam (9) when the concertina support element consisting of rods (13, 14) and the joint element (19) is completely open.

2. Device as in claim 1, **characterized in that** the second slot (33) is sloping at a pre-set angle with respect to the first slot (32) and is shorter than the first slot (33).

3. Device as in claim 1, **characterized in that** at the level of the first slot (32) the rigid body (31) is wider than the first rod (13).

4. Device as in claim 2, **characterized in that** the height of the elastic pad (35) is greater than the distance between the upper part of the longitudinal beam (9) and the point at which the end of the first or of the second rod (13, 14) respectively is hinged to a carriage (3).

5. Device as in claim 1, **characterised in that** the first and the second longitudinal slot (32, 33) are divided by means (34) suitable to prevent the first rod (13), sliding in the first slot (32), from accidentally slipping into the second slot (33) and the second rod (14), sliding in the second slot (33), from accidentally slipping into the first slot (32).

6. Device as in claim 1, **characterised in that**, at the level of the first slot (32), the rigid body (31) is provided with two pairs of protruding portions which extend throughout the whole length of the first slot (31), constraining the first rod (13) to slide without rotating in the first slot (32).

7. Device as in claim 1, **characterised in that** the length of the first slot (32) is between approximately 50 and 70 mm and the length of the second slot (33) is between approximately 5 and 10 mm.

8. Device as in claim 1, **characterised in that** the length of the first slot (32) is approximately 60 mm and the length of the second slot (33) is approximately 7-8 mm.

9. Device as in claim 1, **characterised in that** the second slot (33) is sloping with respect to the first slot (32) at an angle between approximately 50 and 70 degrees.

10. Device as in claim 1, **characterised in that** the second slot (33) is sloping with respect to the first slot (32) at an angle of approximately 60 degrees.

11. Device as in claim 1, **characterised in that** the first and second rod (13, 14) are not in line and form an angle always smaller than a straight angle.

## Patentansprüche

1. Vorrichtung zum Zusammenfalten der Plane eines Transportfahrzeuges, die mehrere Stäbe (13, 14), umfasst, wobei ein Ende (15, 16) an einem Schlitten (3) angelenkt ist, der an dem oberen Teil eines Längsbalkens (9), welcher zu der Tragstruktur der Vorrichtung gehört, gleitet, und die anderen Enden (17, 18) der Stäbe (13, 14) durch ein Gelenkelement (19) miteinander verbunden sind, **dadurch gekennzeichnet, dass** das Gelenkelement (19) einen länglich geformten starren Körper (31), der mit einem ersten und einem zweiten Längsschlitz (32, 33) versehen ist, in denen jeweils die Enden (20, 21) der ersten und zweiten Stäbe (13, 14) gleiten, und ein elastisches Kissen (35) umfasst, das an dem unteren Teil des starren Körpers (31) befestigt und dafür geeignet ist, auf dem oberen Teil des Längsbalkens (9) aufzuliegen, wenn das Faltträgerelement, das aus den Stäben (13, 14) und dem Gelenkelement (19) besteht, vollständig offen ist.

2. Vorrichtung nach Anspruch 1, **dadurch gekennzeichnet, dass** der zweite Schlitz (33) unter einem voreingestellten Winkel in Bezug auf den ersten Schlitz (32) schräg gestellt und kürzer als der erste Schlitz (33) ist.

3. Vorrichtung nach Anspruch 1, **dadurch gekennzeichnet, dass** der starre Körper (31) auf der Höhe des ersten Schlitzes (32) breiter ist als der erste Stab (13).

4. Vorrichtung nach Anspruch 2, **dadurch gekennzeichnet, dass** die Höhe des elastischen Kissens (35) größer ist als der Abstand zwischen dem oberen Teil des Längsbalkens (9) und dem Punkt, an dem das Ende des ersten oder des zweiten Stabes (13, 14) jeweils an einem Schlitten (3) angelenkt ist.

5. Vorrichtung nach Anspruch 1, **dadurch gekennzeichnet, dass** der erste und der zweite Längsschlitz (32, 33) durch Mittel (34) unterteilt sind, die dafür geeignet sind, zu verhindern, dass der erste Stab (13), der in dem ersten Schlitz (32) gleitet, versehentlich in den zweiten Schlitz (33) rutscht, und der zweite Stab (14), der in dem zweiten Schlitz (33) gleitet, versehentlich in den ersten Schlitz (32) rutscht.

6. Vorrichtung nach Anspruch 1, **dadurch gekennzeichnet, dass** der starre Körper (31) auf der Höhe des ersten Schlitzes (32) mit zwei Paaren vorstehender Abschnitte versehen ist, die sich über die gesamte Länge des ersten Schlitzes (31) erstrecken und den ersten Stab (13) so einschränken, dass er ohne Drehung in dem ersten Schlitz (32) gleitet.

7. Vorrichtung nach Anspruch 1, **dadurch gekennzeichnet, dass** die Länge des ersten Schlitzes (32) zwischen annähernd 50 und 70 mm beträgt und die Länge des zweiten Schlitzes (33) zwischen annähernd 5 und 10 mm beträgt.

8. Vorrichtung nach Anspruch 1, **dadurch gekennzeichnet, dass** die Länge des ersten Schlitzes (32) annähernd 60 mm beträgt und die Länge des zweiten Schlitzes (33) annähernd 7 bis 8 mm beträgt.

9. Vorrichtung nach Anspruch 1, **dadurch gekennzeichnet, dass** der zweite Schlitz (33) in Bezug auf den ersten Schlitz (32) unter einem Winkel zwischen annähernd 50 und 70 Grad schräg gestellt ist.

10. Vorrichtung nach Anspruch 1, **dadurch gekennzeichnet, dass** der zweite Schlitz (33) in Bezug auf den ersten Schlitz (32) unter einem Winkel von annähernd 60 Grad schräg gestellt ist.

11. Vorrichtung nach Anspruch 1, **dadurch gekennzeichnet, dass** der erste und der zweite Stab (13, 14) sich nicht in einer Linie befinden und einen Winkel bilden, der immer kleiner ist als ein gestreckter Winkel.

## Revendications

1. Dispositif destiné au pliage d'une bâche de véhicule de transport, comprenant une pluralité de tiges (13, 14) avec une extrémité (15, 16) articulée sur un chariot (3) glissant sur la partie supérieure d'une poutre longitudinale (9) faisant partie de la structure de soutien dudit dispositif, les autres extrémités (17, 18) des tiges (13, 14) étant connectées entre elles par un élément de liaison (19), **caractérisé en ce que** ledit élément de liaison (19) comprend un corps rigide de forme allongée (31) muni d'une première et d'une seconde fentes longitudinales (32, 33) dans lesquelles les extrémités (20, 21) de la première et de la seconde tige (13, 14) coulissent respectivement, et d'un tampon élastique (35) fixé à la partie inférieure du corps rigide (31) et conçu pour se maintenir sur la partie supérieure de la poutre longitudinale (9) lorsque l'élément de soutien du pliage en accordéon composé des tiges (13, 14) et de l'élément de liaison (19) est totalement ouvert.

2. Dispositif selon la revendication 1, **caractérisé en ce que** la seconde fente (33) est inclinée d'un angle prédéterminé par rapport à la première fente (32) et est plus courte que la première fente (32).

3. Dispositif selon la revendication 1, **caractérisé en ce qu'**au niveau de la première fente (32) le corps rigide (31) est plus large que la première tige (13).

4. Dispositif selon la revendication 2, **caractérisé en ce que** la hauteur du tampon élastique (35) est supérieure à la distance entre la partie supérieure de la poutre longitudinale (9) et le point auquel l'extrémité de la première ou de la seconde tige (13, 14) s'articule respectivement au chariot (3).

5. Dispositif selon la revendication 1, **caractérisé en ce que** la première et la seconde fentes longitudinales (32, 33) sont partagées par un moyen (34) conçu pour empêcher que la première tige (13), coulissant dans la première fente (32), ne glisse accidentellement dans la seconde fente (33) et que la seconde tige (14), coulissant sans la seconde fente (33), ne glisse accidentellement dans la première fente (32).

6. Dispositif selon la revendication 1, **caractérisé en ce que**, au niveau de la première fente (32), le corps rigide (31) est muni de deux paires de parties saillantes qui s'étendent à travers toute la longueur de la première fente (31), forçant la première tige (13) à coulisser dans la première fente (32) sans pivoter.

7. Dispositif selon la revendication 1, **caractérisé en ce que** la longueur de la première fente (32) est comprise entre 50 et 70 mm approximativement et la longueur de la seconde fente (33) est comprise entre 5 et 10 mm approximativement.

8. Dispositif selon la revendication 1, **caractérisé en ce que** la longueur de la première fente (32) est approximativement de 60 mm et la longueur de la seconde fente (33) est approximativement de 7-8 mm.

9. Dispositif selon la revendication 1, **caractérisé en ce que** la seconde fente (33) est inclinée par rapport à la première fente (32) d'un angle compris entre environ 50 et 70 degrés.

10. Dispositif selon la revendication 1, **caractérisé en ce que** la seconde fente (33) est inclinée par rapport à la première fente (32) d'un angle d'approximativement 70 degrés.

11. Dispositif selon la revendication 1, **caractérisé en ce que** la première et la seconde tige (13,14) ne sont pas en ligne et forment un angle toujours inférieur à un angle plat.
